Europäisches Patentamt

European Patent Office

Office européen des brevets

(11) Veröffentlichungsnummer : **0 063 245**
**B1**

# (12) EUROPÄISCHE PATENTSCHRIFT

(45) Veröffentlichungstag der Patentschrift :
21.11.85

(21) Anmeldenummer : 82102285.2

(22) Anmeldetag : 19.03.82

(51) Int. Cl.⁴ : **G 01 M 17/02**

---

(54) Einrichtung zur betriebsähnlichen Prüfung von Fahrzeugrädern.

---

(30) Priorität : 11.04.81 DE 3114714
28.09.81 DE 3138573

(43) Veröffentlichungstag der Anmeldung :
27.10.82 Patentblatt 82/43

(45) Bekanntmachung des Hinweises auf die Patenterteilung : 21.11.85 Patentblatt 85/47

(84) Benannte Vertragsstaaten :
AT BE CH DE FR GB IT LI NL SE

(56) Entgegenhaltungen :
DD-A-  52 228
DE-A- 2 551 067
DE-A- 2 601 259
DE-B- 1 939 765
DE-B- 2 205 288
DE-B- 2 854 803

(73) Patentinhaber : Fraunhofer-Gesellschaft zur Förderung der angewandten Forschung e.V.
Leonrodstrasse 54
D-8000 München 19 (DE)

(72) Erfinder : Fischer, Gerhard
Menzelweg 6
D-6100 Darmstadt (DE)
Erfinder : Grubisic, Vatroslav, Dr.
Zum Stetteritz 1
D-6107 Rheinheim 4 (DE)

(74) Vertreter : Kraus, Walter, Dr. et al
Patentanwälte Kraus Weisert & Partner Tho-
mas-Wimmer-Ring 15
D-8000 München 22 (DE)

EP 0 063 245 B1

---

Jouve, 18, rue St-Denis, 75001 Paris, France

## Beschreibung

Die Erfindung betrifft eine Einrichtung zur Prüfung von Fahrzeugrädern, Radnaben, Radlagern und Radschrauben unter betriebsähnlichen Belastungsbedingungen, umfassend

(a) eine Halterungseinrichtung zum drehbaren Befestigen eines Fahrzeugrads ;

(b) eine derart um das Fahrzeugrad herum angeordnete Trommel, daß das Fahrzeugrad über einen darauf befindlichen Reifen in Rolleingriff mit der inneren Umfangsoberfläche der Trommel bringbar ist ;

(c) eine Radialbelastungseinrichtung, die zum Aufbringen einer in der Radialrichtung des Fahrzeugrads wirkenden Radialkraft auf die Halterungseinrichtung mit letzterer verbunden ist ;

(d) eine Axialbelastungseinrichtung zum Aufbringen einer in der Axialrichtung des Fahrzeugrads wirkenden Axialkraft ;

(e) wenigstens einen auf der inneren Umfangsoberfläche der Trommel angeordneten Ring ; und

(f) eine Einrichtung zum Drehen der Trommel.

Die Erfindung betrifft ferner eine Einrichtung zur Prüfung von Radnaben, Radlagern und Radschrauben unter betriebsähnlichen Belastungsbedingungen, umfassend

(a) eine Halterungseinrichtung zum drehbaren Befestigen eines Rades ;

(b) eine derart um das Rad herum angeordnete Trommel, daß das Rad an der inneren Umfangsoberfläche der Trommel anbringbar ist ;

(c) eine Radialbelastungseinrichtung, die zum Aufbringen einer in der Radialrichtung des Rads wirkenden Radialkraft auf die Halterungseinrichtung mit letzterer verbunden ist ;

(d) eine Axialbelastungseinrichtung zum Aufbringen einer in der Axialrichtung des Rads wirkenden Axialkraft ; und

(e) eine Einrichtung zum Drehen der Trommel.

Einrichtungen der vorgenannten Art sind aus der DE-A-2 601 259 insoweit bekannt, als sie nur zur Prüfung von Rädern für Schienenfahrzeuge sowie nur zur Prüfung von jeweils dem gesamten Schienenrad einschließlich der Nabe und der Achse geeignet sind, da das Schienenfahrzeugrad in einer umlaufenden Trommel mit Schienenprofil abläuft. Weiter ergeben sich Nachteile bezüglich der Radial- und Axialbelastung, da die Radialbelastungseinrichtung an einem Ende der Radachse angreift und diese kippt, und da die Axialbelastungseinrichtung an der Trommel angreift und diese ebenfalls kippt. Bei der Einrichtung nach der DE-A-2 601 259 ist infolgedessen keine reine Radialbelastung möglich, weil wegen des Kippens der Radachse immer auch eine Axialkomponente der Radbelastung erzeugt wird. Zwar ist diese Axialkomponente bei nicht deformierbaren Laufflächen, wie sie bei Schienenfahrzeugen vorhanden sind, vernachlässigbar, nicht jedoch bei Fahrzeugrädern mit elastisch deformierbarem Reifen. Hier würde sich durch das Kippen der Radachse eine andere Verformung des Reifens und damit eine andere Belastung der Felge etc. ergeben, als das bei der praktischen Anwendung solcher Reifen beim Betrieb von Kraftfahrzeugen der Fall ist.

Dadurch, daß in der Einrichtung nach der DE-A-2 601 259 die Axialbelastung auf das Rad über ein Kippen der Trommel bewirkt wird, ergibt sich ebenfalls keine reine Axialbelastung, sondern es wird immer auch eine Radialkomponente der Belastung gleichzeitig mit erzeugt. Außerdem ergibt sich dadurch, daß die Trommel gekippt werden muß, weiter ein komplizierter Aufbau der gesamten Einrichtung. Dieses Kippen hat darüber hinaus noch den Nachteil, daß sich bei einem Fahrzeugrad mit elastisch deformierbarem Reifen im Gegensatz zu Schienenfahrzeugrädern, welche eine nicht deformierbare Lauffläche haben, viel zu große Wege bei Anwendung der jeweiligen Belastung ergeben würden.

Insgesamt wird in der Einrichtung nach der DE-A-2 601 259 nur die ganz normale Situation simuliert, die sich beim Zusammenwirken eines Schienenfahrzeugrads mit der zugehörigen Schiene ergibt, und zwar erfolgt diese Simulierung konstruktiv genau entsprechend den tatsächlichen Verhältnissen beim Schienenverkehr.

Weiterhin ist aus der DD-A-52 228 ein Dauerlaufprüfstand zum Prüfen von Fahrzeugrädern und -reifen auf Verschleißfestigkeit bekannt, bei dem die Prüflinge auf der als Laufbahn dienenden inneren Mantelfläche eines Hohlzylinders abrollen. Dieser Dauerlaufprüfstand weist einen in Form eines Hohlzylinders mit vertikaler Achse ausgeführten ortsfesten Laufkranz mit auswechselbar eingesetzten Segmenten aus einem dem Straßenbelag entsprechenden Material und einen vorzugsweise zentral gelagerten, motorisch angetriebenen Rotor mit radial ausladenden Armen auf, an deren Enden Lagerstellen für die Prüflinge vorgesehen sind, denen die Konkavflächen der auswechselbaren Segmente als Laufbahn dienen. Hier können nur Radialkräfte auf die Fahrzeugräder und -reifen, die als Prüflinge verwendet werden, sowie nur reibschlüssig bewirkte Seitenkräfte ausgeübt werden. Somit ist nur die Prüfung des Verschleißverhaltens von Fahrzeugrädern und -reifen möglich dagegen wegen des starken Reifenverschleißes keine Überprüfung der Ermüdungsfestigkeit von Fahrzeugrädern durchführbar. Eine allgemeine Gesamtprüfung von Fahrzeugrädern, Radnaben, Radlagern und Radschrauben, die sich nicht nur auf den Verschleiß beschränkt, ist mit der Einrichtung nach DD-A-52 228 nicht möglich.

Aufgabe der Erfindung ist es, eine Einrichtung der eingangs zuerst genannten Art zur Prüfung von Fahrzeugrädern, Radnaben, Radlagern und Radschrauben unter betriebsähnlichen Belastungsbedingungen zu schaffen, mit der es möglich ist, alle Betriebsbelastungen, d. h. die vertikalen und horizontalen Kräfte einschließlich ihrer maximalen, im Betrieb auftretenden Werte zutreffend zu simulieren, wobei die Deformation des Fahrzeugrades und die Kraftüberleitung vom Reifen in das Fahrzeugrad so weit wie möglich den tatsächlichen Verhältnissen entsprechen und der Verschleiß des Reifens so gering wie möglich gehalten werden soll.

Außerdem soll mit der Erfindung eine Einrichtung der eingangs an zweiter Stelle genannten Art zur Prüfung von Radnaben, Radlagern und Radschrauben unter betriebsähnlichen Belastungsbedingungen zur Verfügung gestellt werden, die es ebenfalls ermöglicht, alle Betriebsbelastungen, d. h. die vertikalen und die horizontalen Kräfte einschließlich ihrer maximalen, im Betrieb auftretenden Werte zutreffend zu simulieren, ohne daß hierbei ein Reifen verwendet werden muß, so daß also bei dieser Prüfung überhaupt kein Reifenverschleiß auftritt.

Die erstere der beiden vorstehenden Aufgaben wird erfindungsgemäß dadurch gelöst, daß

(1) die Axialbelastungseinrichtung zum Aufbringen der Axialkraft auf die Halterungseinrichtung mit letzterer verbunden ist ; und

(2) der Ring als Anlaufring benachbart dem Reifen und der Flanke des Fahrzeugrads angeordnet und auf der dem Reifen zugewandten Seite abgeschrägt ist.

Auf diese Weise läßt sich die Axialkraft in vorteilhafter Weise über die Halterungseinrichtung aufbringen, so daß also kein Kippen der Trommel erforderlich ist, und die über den Reifen auf das Fahrzeugrad ausgeübten Seitenkräfte werden überwiegend durch Formschluß und nicht durch den Reifen verschleißenden und die Größe der Seitenkräfte begrenzenden Reibungsschluß, wie er in der Praxis des Kraftfahrzeugverkehrs auftritt, erzeugt.

Die vorstehend an zweiter Stelle genannte Aufgabe wird erfindungsgemäß dadurch gelöst, daß

(1) das Rad eine mittels Radschrauben, einer Radnabe und einem Radlager mit der Halterungseinrichtung in Eingriff bringbare Ersatzvorrichtung für ein Fahrzeugrad ist ;

(2) die Axialbelastungseinrichtung zum Aufbringen der Axialkraft auf die Halterungseinrichtung mit letzterer verbunden ist.

Diese Einrichtung hat ebenfalls den Vorteil, daß die Axialkräfte über die Halterungseinrichtung aufgebracht werden können, also die Trommel nicht gekippt zu werden braucht, und daß wegen der Verwendung einer Ersatzvorrichtung überhaupt kein Reifen benötigt wird und infolgedessen auch kein Reifenverschleiß stattfindet.

Weiterbildungen der Erfindung sind in den Unteransprüchen angegeben.

Bevorzugte Ausführungsformen der Erfindung werden nachstehend anhand einiger in den Figuren 1 bis 8 der Zeichnung dargestellter, besonders bevorzugter Ausführungsformen der erfindungsgemäßen Einrichtung näher erläutert ; es zeigen :

Figur 1 eine Seitenansicht einer ersten Ausführungsform einer Einrichtung nach der Erfindung ;

Figur 2 eine Stirnansicht der in Fig. 1 gezeigten Einrichtung, und zwar gesehen von rechts ;

Figur 3 bis 5 Darstellungen der Einrichtung nach Fig. 1 unter verschiedenen Prüfbedingungen ;

Figur 6 eine Einrichtung, der in Fig. 1 bis 5 gezeigten Art, wobei jedoch das in der Einrichtung befindliche Fahrzeugrad mit einer Bremseinrichtung versehen ist ;

Figur 7 eine Ausführungsform einer Einrichtung nach der Erfindung, die zur Aufnahme von Zwillingsrädern geeignet ist sowie einen Schnitt durch eines der beiden Zwillingsräder und dessen Radnabe sowie dessen Radlager ;

Figur 8 eine Ausführungsform einer Einrichtung nach der Erfindung, in der eine Ersatzvorrichtung für ein Fahrzeugrad vorgesehen ist.

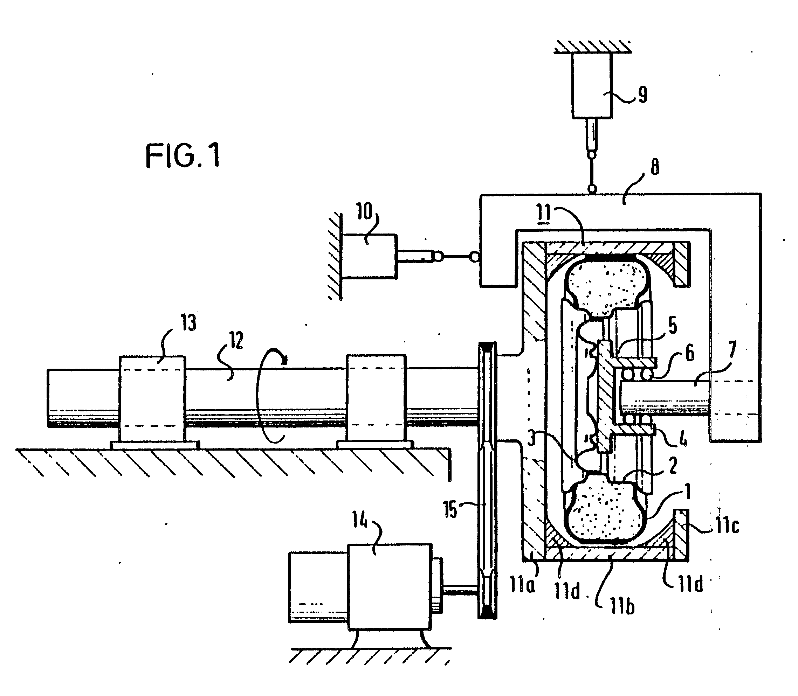

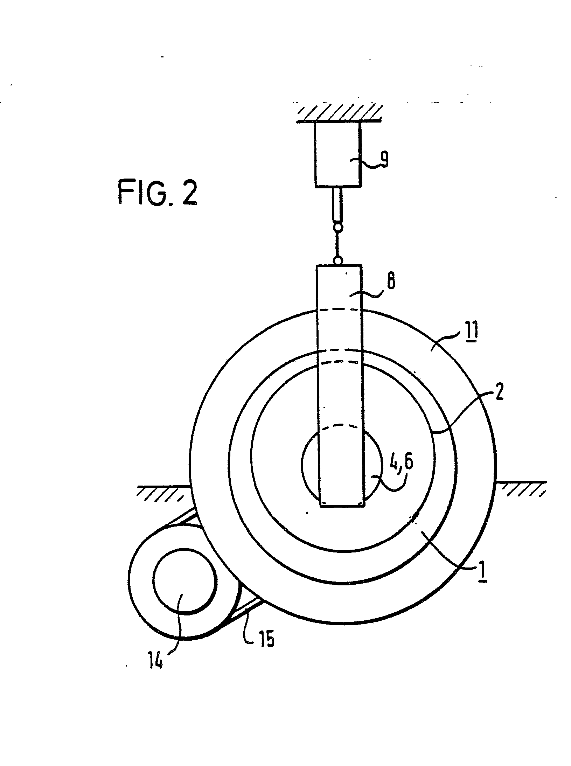

Es sei zunächst auf die Figuren 1 und 2 Bezug genommen, die eine erste Ausführungsform einer Einrichtung zur Prüfung von Fahrzeugrädern, Radnaben, Radlagern und Radschrauben unter betriebsähnlichen Belastungsbedingungen zeigt, welche einschließlich der zu prüfenden Objekte folgendes aufweist :

Einen Reifen 1, der auf der Felge 2 eines aus letzterer und einer Radschüssel 3 bestehenden Rades 2, 3 montiert und mit Nennluftdruck oder erhöhtem Luftdruck aufgepumpt ist. Zur Befestigung des Fahrzeugrads 1, 2 und zur Aufnahme der Fahrzeugradkräfte ist eine Radnabe 4 vorgesehen. Bei dieser Radnabe kann es sich um eine überdimensionierte Versuchsnabe handeln, wenn zum Beispiel das Fahrzeugrad 1, 2 geprüft werden soll oder es kann sich hierbei um eine Originalnabe mit der zugehörigen Original-Fahrzeuglagerung handeln, wenn die Radnabe und/ oder die Fahrzeuglagerung geprüft werden soll. Zur Befestigung des Fahrzeugrads 1, 2 an der Radnabe 4 dienen Radschrauben 5. Die Übertragung der eingeleiteten quasistatischen Kräfte in das sich drehende Fahrzeugrad 1, 2 erfolgt mittels eines Radlagers 6 und Achszapfen 7. Bei der Prüfung des Fahrzeugrads 1, 2 werden überdimensionierte Radlager 6 verwendet, während bei der Prüfung der Radnabe 4 und der Radlager 6 die Originalradlager sowie die Originalachsschenkel eingebaut werden.

Weiterhin weist die Einrichtung gemäß den Figuren 1 und 2 einen Belastungsbügel 8 auf, der zusammen mit dem Achszapfen 7 eine Halterungseinrichtung zum drehbaren Befestigen des Fahrzeugrads 2, 3 bildet. Über diesen Belastungsbügel 8, den Achszapfen 7, die Radlager 6, die Radnabe 4 und die Radschrauben 5 werden eine Radialkraft und eine Axialkraft in die Radschüssel 3 eingeleitet, und zwar so, daß die am Reifen 1 entstehenden Reaktionskräfte in einem definierten Radaufstandspunkt abgenommen werden. Zum Anwenden einer in der Radialrichtung des Fahrzeugrads 2, 3 wirkenden konstanten oder unterschiedlich hohen Radialkraft ist eine Radialbelastungseinrichtung 9, die vorliegend als servohydraulischer Zylinder ausgebildet ist, vorgesehen. Weiter ist zum Anwenden einer in der Axialrichtung des Fahrzeugrads 2, 3 wirkenden konstanten oder unterschiedlich hohen Axialkraft eine Axialbelastungseinrichtung 10 vorhanden, die vorliegend ebenfalls als servohydraulischer Zylinder ausgebildet ist.

Schließlich ist eine derart um das Fahrzeugrad 2, 3 herum angeordnete Trommel 11, daß das Fahrzeugrad 2, 3 über den darauf befindlichen Reifen 1 in Rolleingriff mit der inneren Umfangsoberfläche der Trommel bringbar ist, vorgesehen. Die Trommel 11 besteht aus einer Grundplatte 11a, einem Trommelkörper 11b, einem Deckel 11c und zwei Anlaufringen 11d. In dieser Trommel 11, in der das Fahrzeugrad 1, 2 abrollt, werden die Axialreaktionskraft und Radialreaktionskraft im Radaufstandspunkt im Reifen 1 abgenommen. Der Innendurchmesser des Trommelkörpers 11b kann gegenüber dem Reifendurchmesser gleich oder geringfügig größer sein.

Endlich ist eine Einrichtung zum Drehen der Trommel 11 vorgesehen, welche eine Antriebswelle 12 zur Befestigung der Trommel 11, Lager 13 zur Lagerung der Antriebswelle 12 und zur Aufnahme der Radial- und Axialreaktionskräfte, einen Antriebsmotor 14 zum Antrieb der Antriebswelle 12 über einen Keilriemenantrieb 15 und damit zum Antrieb der Trommel 11 und des Fahrzeugrads 2, 3 sowie zum Abbremsen der Antriebswelle 12, der Trommel 11 und des Fahrzeugrads 2, 3 umfaßt.

Es sei nun die Funktionsweise der vorstehend beschriebenen Einrichtung zur Prüfung von Fahrzeugrädern, Radnaben, Radlagern und Radschrauben unter betriebsähnlichen Belastungsbedingungen näher erläutert :

Die betriebsähnliche Prüfung von Fahrzeugrädern 2, 3, Radnaben 4, Radschrauben 5 und Radlagern 6 erfolgt unter Einleitung der im Betrieb auftretenden Radkräfte über den Reifen 1 in das sich drehende Fahrzeugrad 2, 3. Bei den am Reifen 1 angreifenden Radkräften kann es sich um Radialkräfte $F_v$, positive Axialkräfte $+ F_h$, negative Axialkräfte $- F_h$ sowie Tangentialkräfte $F_t$ (Antriebs- und Bremskräfte) sowie Kombinationen hiervon handeln.

Es sei zunächst die Erzeugung von in der Radialrichtung des Fahrzeugrads 2, 3 wirkenden Radialkräften beschrieben :

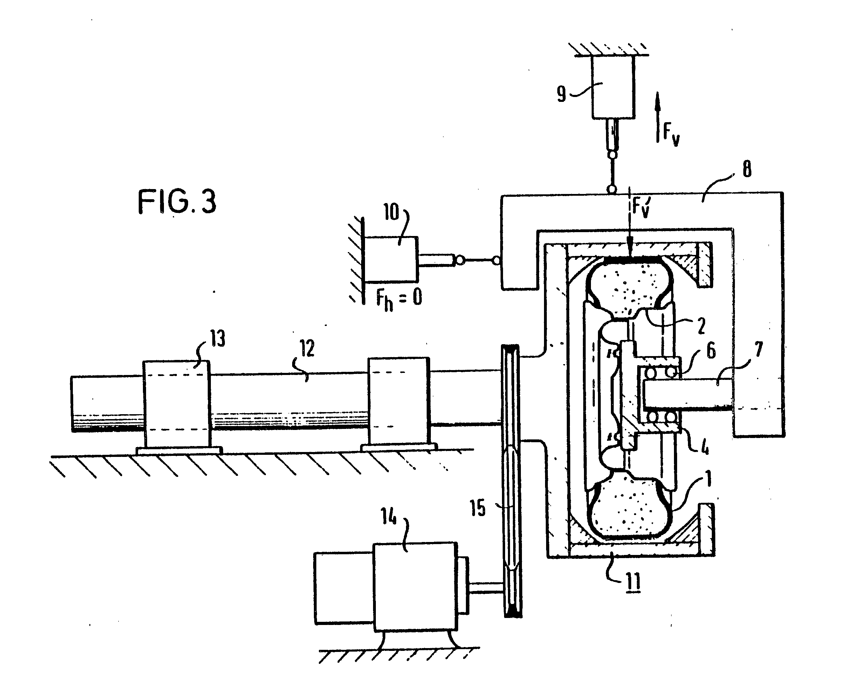

Auf das Fahrzeugrad wirkende Radialkräfte entstehen im Betrieb bei Geradeausfahrt eines Fahrzeuges, wobei diese Radialkräfte in unterschiedlicher Höhe je nach den Fahrbedingungen auftreten können, bei denen es sich beispielsweise um eine Fahrt auf ideal ebener Straße, eine Fahrt über Schlaglöcher, Frostaufbrüche, Bahnübergänge usw. handeln kann. Die am Fahrzeugrad wirkenden Radialreaktionskräfte $F_v'$ (siehe Figur 3) werden erzeugt, wenn an der Radialbelastungseinrichtung 9 eine Zugkraft als Radialkraft $F_v$ in den Belastungsbügel 8 eingeleitet wird und sich das Fahrzeugrad 2, 3 gegenüber dem Reifen 1 an der sich drehenden Trommel 11 abstützt. Durch die Verformung, nämlich die Eindrückung, des Reifens 1 unter der Radialreaktionskraft $F_v'$ entsteht ein Radaufstandspunkt, d. h. die Reaktionskraft wird über einen definierten Bereich über den Reifenumfang und der Reifenbreite eingeleitet, wobei in dem um 180° versetzten Radbereich ein Zwischenraum zwischen dem Reifen 1 und dem Trommelkörper 11 b auftreten kann. Voraussetzung zur Erzeugung von rein radialen Reaktionskräften im Fahrzeugrad ist die Einleitung der erwähnten Zugkraft mit Hilfe der Radialbelastungseinrichtung 9 in der Radmitte. Durch die verschiebbar vorgesehene Einleitung der Kraft in den Belastungsbügel 8 ist eine Anpassung für jede Reifenbreite möglich.

Es sei als nächstes die Erzeugung von in der Axialrichtung des Fahrzeugrads wirkenden Axialkräften erläutert :

Axialkräfte entstehen im Betrieb eines Fahrzeugs bei Kurvenfahrt mit zur Fahrzeugmitte gerichteter Kraftkomponente, also positiver Axialkraft $+ F_h$ am kurvenäußeren Rand und bei Geradeausfahrt über Fahrbahnunebenheiten, zum Beispiel Schlaglöcher, wodurch die Kraftrichtung sowohl zur Fahrzeugmitte, was einer positiven Axialkraft $+ F_h$ entspricht, als auch zur Fahrzeugaußenseite, was einer negativen Axialkraft $- F_h$ entspricht, gerichtet sein kann. Im Fahrbetrieb können Axialkräfte nur in Verbindung mit Radialkräften als Lastkombinationen auftreten. In der vorliegenden Einrichtung werden die auf das Fahrzeugrad einwirkenden Axialkräfte als Reaktionskräfte mit Hilfe der Axialbelastungseinrichtung 10, die als servohydraulischer Zylinder ausgebildet ist, erzeugt.

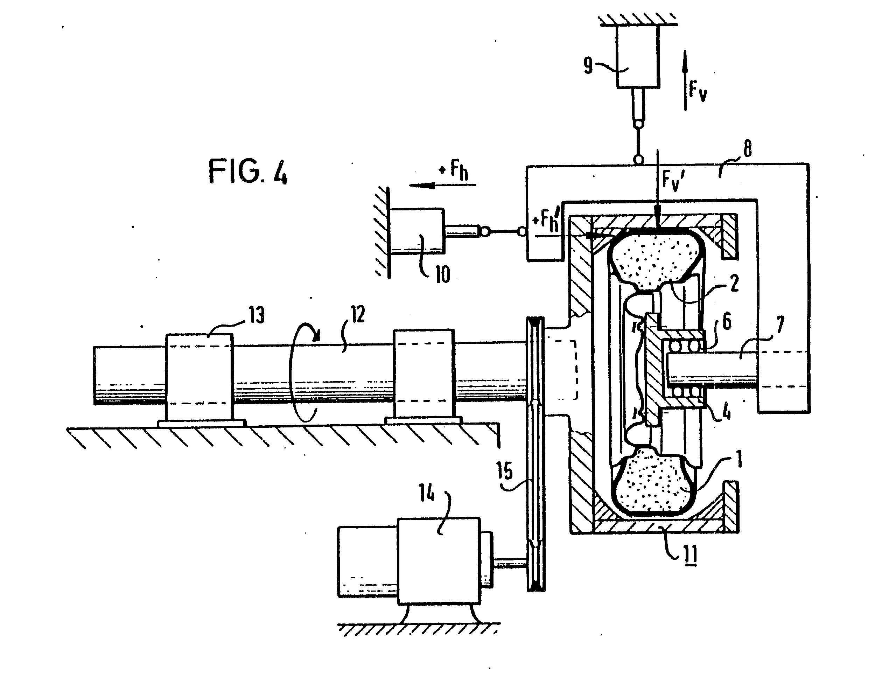

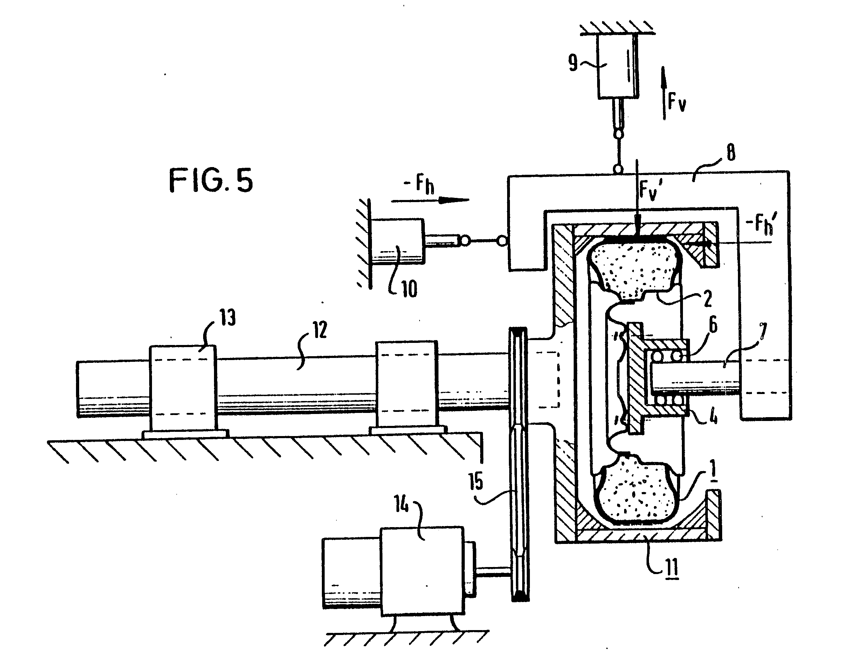

Eine positive Axialreaktionskraft $+ F_h'$ wird bei gegebener Radialreaktionskraft $F_v'$ durch eine Zugkraft an der Axialbelastungseinrichtung als Reaktionskraft durch die Abstützung des Reifens 1 an der schrägen Fläche des Anlaufringes 11d hervorgerufen (siehe Figur 4). Die Zugkraft an der Axialbelastungeinrichtung 10 wird in der Höhe der Innenlauffläche des Trommelkörpers 11b im Radaufstandspunkt eingeleitet, wobei die Axialreaktionskraft $F_h'$ am Reifen 1 im Bereich der Radaufstandsfläche über einen begrenzten Bereich des Reifenumfangs des Reifens resultiert. Durch die Einleitung der Axialkraft in Höhe der Radaufstandspunkte sind betriebsgleiche Hebelarmverhältnisse gewährleistet. Eine negative Axialreaktionskraft $- F_h'$ wird bei gegebener Radialreaktionskraft $F_v'$ durch eine Druckkraft an der Axialbelastungseinrichtung 10 erzeugt, wodurch die Axialreaktionskraft am Fahrzeugrad durch Ablauf des Reifens 1 am äußeren Anlaufring 11d entsteht (siehe Figur 5).

Die Anlaufringe 11d sind im Trommelkörper 11b verschiebbar angeordnet, so daß eine Anpassung an beliebige Reifenbreiten bzw. Fahrzeugradgrößen möglich ist, was aufgrund des begrenzten Zylinderwegs des die Axialbelastungseinrichtung 10 bildenden servohydraulischen Zylinders erforderlich ist.

Durch die Einleitung der Axialreaktionskräfte $\pm F_h'$ über die Anlaufringe 11d kann mit der vorliegenden Einrichtung durch den hierdurch bedingten Formschluß ein beliebiges Verhältnis $F_h'/F_v'$ erreicht werden.

Die Steuerung der Radialbelastungseinrichtung 9 und der Axialbelastungseinrichtung 10 erfolgt unabhängig voneinander, so daß jede gewünschte Lastkombination, bestehend aus Radialkräften $F_v$ und positiven Axialkräften $+ F_h$ sowie negativen Axialkräften $- F_h$ eingestellt werden kann. Dadurch ist eine betriebsähnliche, regellose Simulation aller im Betrieb auftretenden Belastungsfälle möglich.

Es sei nun die Erzeugung von Tangentialkräften, die auch als Längskräfte bezeichnet werden können, erläutert :

Tangentialkräfte sind für die Prüfung eines Fahrzeugrads nur dann von Bedeutung, wenn es sich um Speichenräder, zum Beispiel Motorradräder oder Lastkraftwagen-Radsterne, handelt. Sie entstehen durch Anfahr- und vor allem durch Bremsvorgänge.

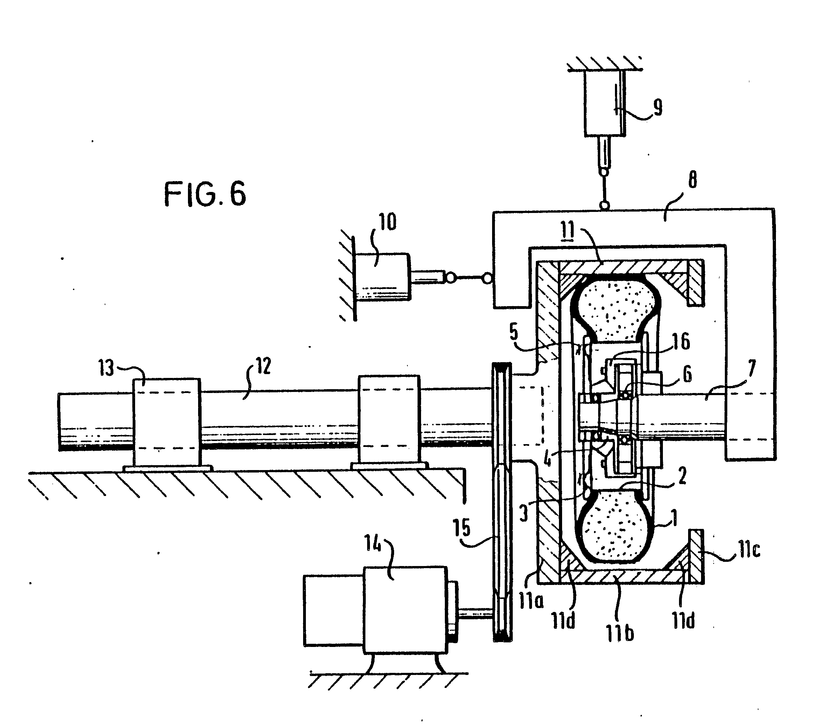

Eine Simulation der Tangentialkräfte (siehe Figur 6) kann in der vorliegenden Einrichtung durch Abbremsen des Fahrzeugrads 2, 3 mit Hilfe einer an der Radnabe 4 angebrachten Radbremseinrichtung, beispielsweise einer Scheiben- oder Trommelbremse, unter Ausnutzung des Schwungmoments der Trommel 11 und des Antriebsmoments des Antriebsmotors 14 erfolgen. Aufgrund der größeren Aufstandsfläche des Reifens 1 in dem konkaven Trommelkörper 11b gegenüber der ebenen Fahrbahn oder einem konvex gekrümmten Trommelkörper können grundsätzlich höhere Bremskräfte übertragen werden.

Es sei nun anhand der Figuren 1 und 2 die Trommel 11 in näheren Einzelheiten erläutert :

Durch den gegenüber dem Reifendurchmesser gleichen oder nur geringfügig größeren Innendurchmesser des Trommelkörpers 11b der Trommel 11 ergibt sich eine größere Aufstandsfläche zwischen dem Reifen 1 und dem Trommelkörper 11b mit geringerer Flächenpressung und kleinerem Längsschlupf gegenüber dem Rollen auf einer ebenen Fahrbahn, so daß die Erwärmung und der Reifenverschleiß deutlich verringert werden. Dadurch ist es möglich, Versuche mit dem Fünffachen der statischen Radlast durchzuführen, ohne daß vorzeitige Reifenschäden auftreten. Ebenso führt die Einleitung der Axialkräfte als Reaktionskräfte über die Anlaufringe 11d der Trommel 11 zu keinem nennenswerten Verschleiß der Lauffläche des Reifens 1 im Gegensatz zu einer Erzeugung von Axialkräften durch Sturz oder Schräglauf auf einer ebenen Fahrbahn oder einem konvex gekrümmten Trommelkörper. Durch die formschlüssige Abstützung des Reifens 1 an den Anlaufringen 11d und die geringe Erwärmung des Reifens sind auch bei hohen Axialkräften $F_h$ und Prüffrequenzen konstante und reproduzierbare Prüfbedingungen gewährleistet, da keine nennenswerte Veränderung des Reibbeiwertes zwischen dem Reifen 1 und der Trommel 11 eintritt und da die von der Radialkraft $F_v$ unabhängige Axialkraft $F_h$ durch die Axialbelastungseinrichtung 10 kraftgesteuert nachgeregelt wird.

Es sei nun eine Ausführungsform der Einrichtung zur Prüfung von Einzelrädern oder Zwillingsrädern, Radnaben, Radlagern und Radschrauben von Lastkraftwagen beschrieben :

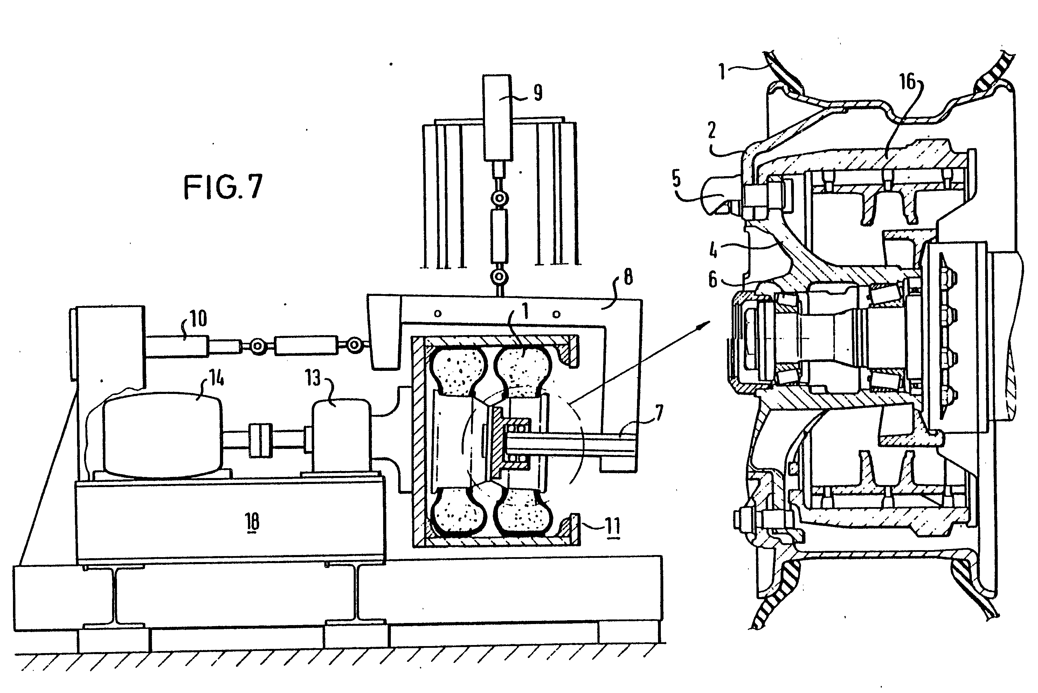

Eine Ausführungsform einer solchen Einrichtung zur Prüfung von Einzel- oder Zwillingsrädern, Radnaben, Radlagern und Radschrauben von Lastkraftwagen ist in Figur 7 dargestellt. Aufbau und Funktion dieser Einrichtung entsprechen dem Aufbau und der Funktion der anhand der Figuren 1 und 2 beschriebenen Einrichtung. In der Einrichtung nach Figur 7 lassen sich die in Figur 3 dargestellten auf das Rad wirkenden Radialkräfte $F_v$, die Axialkräfte $+ F_h$ (siehe Figur 4) und die Axialkräfte $- F_h$ (siehe Figur 5) sowie die Tangentialkräfte durch Abbremsen (siehe Figur 6) einleiten. Zusätzlich können die bei Zwillingsräder auftretenden ungleichmäßigen Belastungen auf beide Räder aufgebracht werden, die zum Beispiel durch Fahren auf gewölbter Fahrbahn von Landstraßen hervorgerufen werden und zu höheren Radkräften am inneren Rad führen. Die Simulation erfolgt durch außermittige Einleitung der Radialkraft $F_v$ von der Radialbelastungseinrichtung 9.

Es sei nun eine Ersatzvorrichtung für ein Fahrzeugrad zur Prüfung von Radnaben, Radlagern und Radschrauben beschrieben :

Bei der Prüfung von Radnaben, Radlagern und Radschrauben unter betriebsähnlichen Bedingungen können vorzeitige Schäden an den Fahrzeugrädern entstehen, wenn diese nicht ausreichend dimensioniert sind, so daß die Radnaben, Radlager und Radschrauben nicht oder nur bei mehrmaligem Austausch des Fahrzeugrads geprüft werden können.

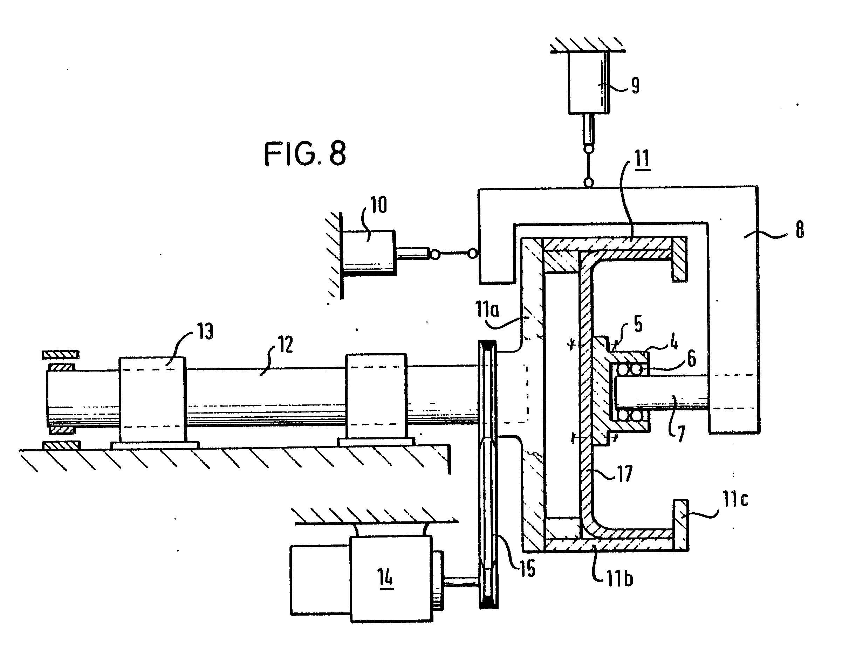

Mit Hilfe einer Ersatzvorrichtung für das Fahrzeugrad, die stärker dimensioniert und ohne Reifen in der Trommel 11 befestigt ist, wie in Figur 8 dargestellt, können Radialkräfte und Axialkräfte über die Radschrauben 5 in den Flansch der Radnaben 4 und die Radlager 6 eingeleitet werden, wobei in der Radnabe 4 nahezu die gleichen Verformungen hervorgerufen werden, wie sie bei Verwendung eines Originalfahrzeugrads und des zugehörigen Reifens auftreten. Ein Ausführungsbeispiel für eine Ersatzkonstruktion ist in Figur 8 dargestellt.

Schließlich seien nachstehend die wesentlichen Vorteile der hier vorgeschlagenen Einrichtung zur Prüfung von Fahrzeugrädern, Radnaben, Radlagern und Radschrauben unter betriebsähnlichen Belastungsbedingungen gegenüber den bekannten Rollprüfständen dargelegt :

Die bisher bekannteste Prüfmethode zur Prüfung eines Fahrzeugrads 2, 3 ist die Rollprüfung. Dabei rollt das Fahrzeugrad auf einer im Durchmesser größeren Trommel auf deren konvexen Oberfläche ab. Die Belastung wird am Fahrzeugrad so aufgebracht, daß am Reifen eine Reaktionskraft entsteht. Die Prüfung des Fahrzeugrads kann durch Radialkräfte und begrenzt durch Axialkräfte erfolgen, wobei die Axialkräfte entweder durch Sturz oder Schräglauf in Abhängigkeit von der Radialkraft erzeugt werden.

Die Höhe der Radkräfte ist bei dieser bekanntesten Prüfmethode stark durch die Reifenfestigkeit begrenzt, so daß zur Verkürzung von Prüfzeiten keine Überbelastungen möglich sind. Mit der starken Erwärmung des Reifens ist während der Prüfung ein Abfall der Axialkräfte durch Verringerung des Reibbeiwerts verbunden, so daß keine konstanten Prüfbedingungen eingehalten werden können. Darüberhinaus ist bei dieser bisher bekanntesten Prüfmethode der Verschleiß der Lauffläche des Reifens so groß, daß während einer Prüfung zum Teil mehrere Reifen benötigt werden. Dadurch ergeben sich neben hohem zeitlichen Aufwand hohe Prüfkosten sowie eine Begrenzung der Prüfungsmöglichkeiten.

Als wesentliche Vorteile der hier vorgeschlagenen Einrichtung zur Prüfung von Fahrzeugrädern, Radnaben, Radlagern und Radschrauben unter betriebsähnlichen Belastungsbedingungen gegenüber den bekannten Rollprüfständen sind zu nennen :

(a) Betriebsgleiche Verformbarkeit an Fahrzeugrad, Radnabe, Radlager und Radschrauben.

(b) Aufbringung beliebiger Lastkombinationen aus Radialkräften und Axialkräften sowie Tangentialkräften entsprechend den im Betrieb auftretenden Radkräften und Nachbildung der Belastung typischer Versuchsstrecken durch Programmsteuerung.

(c) Überlastung des Fahrzeugrads, der Radnabe, der Radlager und der Radschrauben durch Aufbringung wesentlich höherer Radkräfte ohne nennenswerten Reifenverschleiß.

(d) Aufbringung einer von der Radialkraft weitgehend unabhängigen Axialkraft.

(e) Kein Abfall der Axialkräfte während der Prüfung, da diese unabhängig von der Radialkraft und dem Reibbeiwert des Reifens in der Trommel aufgebracht und beliebig nachgeregelt werden können, so daß konstante, reproduzierbare Prüfungsbedingungen vorliegen.

(f) Geringer Reifenverschleiß durch geringe Reifenerwärmung und niedrige Reibbeiwerte.

(g) Verkürzung der Prüfzeiten durch höhere Prüffrequenzen und Wegfall einer mehrmaligen Montage des Reifens infolge Zerstörung.

(h) Einsparung der Kosten für Reifen.

(i) Kostengünstige Gestaltung der Einrichtung zur Prüfung sowie umweltfreundlicher Aufbau bei geringer Geräusch- und Geruchsbelästigung.

(j) Prüfung von Fahrzeugrädern, Radnaben, Radlagern und Radschrauben unter betriebsähnlichen Bedingungen.

(k) Prüfung von Radlagern und Radnaben mit einer Ersatzvorrichtung, wenn das Fahrzeugrad für deren Prüfung nicht ausreichend stark dimensioniert ist.

(l) Prüfung von Zwillingsrädern unter den im Betrieb auftretenden Lastkombinationen aus Radialkräften, Axialkräften und Tangentialkräften unter Berücksichtigung der ungleichmäßigen Belastung beider Räder eines Zwillingsrads.

Endlich sei anhand der Figuren 1 und 2 die Demontage und Montage eines Fahrzeugrads erläutert :

Bei der Demontage erfolgt zunächst ein Lösen der Verbindung zwischen der Radialbelastungseinrichtung 9 sowie der Axialbelastungseinrichtung 10 einerseits und dem Belastungsbügel 8 andererseits. Dann werden die Befestigungsschrauben des Deckels 11c der Trommel 11 gelöst, und danach werden der Deckel 11c und der diesem zugewandte Anlaufring 11d abgenommen. Daraufhin wird die Verschraubung zwischen dem Belastungsbügel 8 und dem Achszapfen 7 gelöst, und der Belastungsbügel 8 wird abgenommen. Schließlich werden das Fahrzeugrad 2, 3 und der Reifen 1 aus der Trommel 11 herausgenommen, woraufhin eine Demontage des Fahrzeugrads 2, 3 durch Lösen der Radschrauben 5 von der Radnabe 4 erfolgt. Die Montage eines Fahrzeugrads in der beschriebenen Einrichtung erfolgt entsprechend in umgekehrter Reihenfolge der vorstehend erläuterten Demontageschritte.

**Patentansprüche**

1. Einrichtung zur Prüfung von Fahrzeugrädern (2, 3), Radnaben (4), Radlagern (6) und Radschrauben (5) unter betriebsähnlichen Belastungsbedingungen, umfassend

(a) eine Halterungseinrichtung (7, 8) zum drehbaren Befestigen eines Fahrzeugsrads (2, 3) ;

(b) eine derart um das Fahrzeugrad (2, 3) herum angeordnete Trommel (11), daß das Fahrzeugrad (2, 3) über einen darauf befindlichen Reifen (1) in Rolleingriff mit der inneren Umfangsoberfläche der Trommel (11) bringbar ist ;

(c) eine Radialbelastungseinrichtung (9), die zum Aufbringen einer in der Radialrichtung des Fahrzeugrads (2, 3) wirkenden Radialkraft auf die Halterungseinrichtung (7, 8) mit letzterer verbunden ist ;

(d) eine Axialbelastungseinrichtung (10) zum Aufbringen einer in der Axialrichtung des Fahrzeugrads (2, 3) wirkenden Axialkraft ;

(e) wenigstens einen auf der inneren Umfangsoberfläche der Trommel (11) angeordneten Ring (11d) ; und

(f) eine Einrichtung (12 bis 15) zum Drehen der Trommel (11) ;
dadurch gekennzeichnet, daß

(g) die Axialbelastungseinrichtung (10) zum Aufbringen der Axialkraft auf dei Halterungseinrichtung (7, 8) mit letzterer verbunden ist ; und

(h) der Ring als Anlaufring (11d) benachbart dem Reifen (1) und der Flanke des Fahrzeugsrads (2, 3) angeordnet und auf der dem Reifen (1) zugewandten Seite abgeschrägt ist.

2. Einrichtung nach Anspruch 1, dadurch gekennzeichnet, daß benachbart jeder Flanke des Fahrzeugrads (2, 3) je ein auf seiner dem Reifen (1) zugewandten Seite abgeschrägter Anlaufring (11d) vorgesehen ist.

3. Einrichtung nach Anspruch 1 oder 2, dadurch gekennzeichnet, daß der Innendurchmesser der Trommel (11) gleich dem Reifendurchmesser oder geringfügig größer als der Reifendurchmesser des unbelasteten Reifens (1) ist.

4. Einrichtung nach Anspruch 1 oder 2, dadurch gekennzeichnet, daß in Kombination mit dem Fahrzeugrad (2, 3) eine Radbremseinrichtung (16) vorgesehen ist.

5. Einrichtung nach Anspruch 4, dadurch gekennzeichnet, daß die Radbremseinrichtung (16) eine Scheiben- oder Trommelbremse ist.

6. Einrichtung nach Anspruch 1, 2 oder 3, dadurch gekennzeichnet, daß auf der Halterungseinrichtung (7, 8) Zwillingsräder befestigbar sind.

7. Einrichtung zur Prüfung von Radnaben (4), Radlagern (6) und Radschrauben (5) unter betriebsähnlichen Belastungsbedingungen, umfassend

(a) eine Halterungseinrichtung (7, 8) zum drehbaren Befestigen eines Rades ;

(b) eine derart um das Rad herum angeordnete Trommel (11), daß das Rad an der inneren Umfangsoberfläche der Trommel (11) anbringbar ist ;

(c) eine Radialbelastungseinrichtung (9), die zum Aufbringen einer in der Radialrichtung des Rads wirkenden Radialkraft auf dei Halterungseinrichtung (7, 8) mit letzterer verbunden ist ;

(d) eine Axialbelastungseinrichtung (10) zum Aufbringen einer in der Axialrichtung des Rads wirkenden Axialkraft ; und

(e) eine Einrichtung (12 bis 15) zum Drehen der Trommel (11) ;
dadurch gekennzeichnet, daß

(f) das Rad eine mittels Radschrauben (5), einer Radnabe (4) und einem Radlager (6) mit der Halterungseinrichtung (7, 8) in Eingriff bringbare Ersatzvorrichtung für ein Fahrzeugrad (2, 3) ist ; und

(g) die Axialbelastungseinrichtung (10) zum Aufbringen der der Axialkraft auf die Halterungseinrichtung (7, 8) mit letzterer verbunden ist.

8. Einrichtung nach Anspruch 1 oder 7 dadurch gekennzeichnet, daß die durch die Radialbelastungseinrichtung (9) aufbringbare Radialkraft und die durch die Axialbelastungseinrichtung (10) aufbringbare Axialkraft unabhängig voneinander einstellbar sind.

9. Einrichtung nach Anspruch 1, 7 oder 8 dadurch gekennzeichnet, daß die Radialbelastungseinrichtung (9) und die Axialbelastungseinrichtung (10) servohydraulische Zylinder sind.

**Claims**

1. An apparatus for testing vehicle wheels (2, 3), wheel hubs (4), wheel bearings (6) and wheel bolts (5) under loading conditions similar to operational conditions, comprising

(a) a holding device (7, 8) for fixing a vehicle wheel (2, 3) such that it can be rotated ;

(b) a drum (11) arranged around the vehicle wheel (2, 3) such that the vehicle wheel (2, 3) can be brought to grip in a rolling manner, via a tyre (1) positioned thereon, the inner circumferential surface of the drum (11) ;

(c) a radial stressing device (9) which is connected to the holding device for applying a radial force acting in the radial direction of the vehicle wheel (2, 3) to the holding device (7, 8) ;

(d) an axial stressing device (10) for applying an axial force acting in the axial direction of the vehicle wheel (2, 3) ;

(e) at least one ring (11d) arranged on the inner circumferential surface of the drum (1) ; and

(f) a device (12 to 15) for rotating the drum (11) ;
characterised in that

(g) the axial stressing device (10) is connected to the holding device for applying the axial force to the holding device (7, 8) ;

(h) the ring is arranged as a start ring (11d) adjacent to the tyre (1) and the side of the vehicle wheel (2, 3) and is slanted on the side inclined towards the tyre (1).

2. An apparatus according to claim 1, characterised in that adjacent to each side of the vehicle wheel (2, 3) a start ring (11d) is provided in each case slanted on the side inclined towards the tyre (1).

3. An apparatus according to claim 1 or 2, characterised in that the inner diameter of the drum (11) is equal to the tyre diameter or slightly greater than the tyre diameter of the unstressed tyre (1).

4. An apparatus according to claim 1 or 2, characterised in that a wheel braking device (16) is provided in combination with the vehicle wheel (2, 3).

5. An apparatus according to claim 4, characterised in that the wheel braking device (16) is a disc or drum break.

6. An apparatus according to claim 1, 2 or 3 characterised in that twin wheels can be fixed on the holding device (7, 8).

7. An apparatus for testing wheel hubs (4), wheel bearings (6) and wheel bolts (5) under loading conditions similar to operational conditions, comprising

(a) a holding device (7, 8) for fixing a wheel such that it can be rotated ;

(b) a drum (11) arranged around the wheel such that the wheel can be applied on the inner circumferential surface of the drum (11) ;

(c) a radial stressing device (9), which is connected to the holding device for applying a radial force acting in the radial direction of the wheel to the holding device (7, 8) ;

(d) an axial stressing device (10) for applying an axial force acting in the axial direction of the wheel ; and

(e) a device (12 to 15) for rotating the drum (11) ;
characterised in that

(f) the wheel is a substitute device for a vehicle wheel (2, 3) which can be brought to grip the fixing device (7, 8) by means of wheel bolts (5), a wheel hub (4) and a wheel bearing (6) ; and

(g) the axial stressing device (10) is connected to the holding device for applying the axial force to the holding device (7, 8).

8. An apparatus according to claim 1 or 7, characterised in that the radial force which can be applied by the radial stressing device (9) and the axial force which can be applied by the axial stressing device (10) are adjustable independently from each other.

9. An apparatus according to claim 1, 7 or 8 characterised in that the radial stressing device (9) and the axial stressing device (10) are servohydraulic cylinders.

**Revendications**

1. Dispositif pour tester les roues de véhicule (2, 3), les moyeux de roues (4), les roulements de roues (6) et les boulons de roues par simulation de fonctionnement, comprenant

(a) un dispositif de fixation (7, 8) permettant la rotation d'une roue de véhicule (2, 3) ;

(b) un tambour (11) disposé autour de la roue du véhicule (2, 3) de telle façon que la roue du véhicule (2, 3) puisse être amenée, par l'intermédiaire d'un pneu (1) qui s'y trouve, en contact de roulement avec la surface périphérique intérieure du tambour (11) ;

(c) un dispositif de charge radiale (9) qui, pour permettre l'application d'une force radiale dans la direction radiale de la roue de véhicule (2, 3) sur le dispositif de fixation (7, 8), est relié à celui-ci ;

(d) un dispositif de charge axiale (10) pour permettre l'application d'une force axiale qui s'exerce dans la direction axiale de la roue de véhicule (2, 3) ;

(e) au moins un collier (11d) disposé sur la surface périphérique intérieure du tambour (11) ; et

(f) un dispositif (12 à 15) permettant de faire tourner le tambour (11) ;
caractérisé par le fait que

(g) le dispositif de charge axiale (10) destiné à l'application de la force axiale sur le dispositif de fixation (7, 8) est relié à ce dernier ; et

(h) le collier est disposé en collier de butée (11d) contigu au pneu (1) et au flanc de la roue de véhicule (1) et chanfreiné sur la face tournée vers le pneu (1).

2. Dispositif suivant la revendication 1, caractérisé par le fait que, contigu à chaque flanc de la roue de véhicule (2, 3), est prévu un collier de butée (11d) chanfreiné sur sa face tournée vers le pneu (1).

3. Dispositif suivant la revendication 1 ou 2, caractérisé par le fait que le diamètre intérieur du tambour (11) est égal au diamètre du pneu ou légèrement supérieur au diamètre du pneu lorsque le pneu (1) n'est soumis à aucune charge.

4. Dispositif suivant la revendication 1 ou 2, caractérisé par le fait qu'un dispositif de freinage de roue (16) est prévu en association avec la roue du véhicule (2, 3).

5. Dispositif suivant la revendication 4, caractérisé par le fait que le dispositif de freinage de roue (16) est un frein à disque ou un frein à tambour.

6. Dispositif suivant la revendication 1, 2 ou 3, caractérisé par le fait que des roues jumelées peuvent être fixées sur le dispositif de fixation (7, 8).

7. Dispositif pour tester des moyeux de roues (4), des roulements de roues (6) et des boulons de roues (5) par simulation de fonctionnement, comprenant

(a) un dispositif de fixation (7, 8) permettant la rotation d'une roue ;

(b) un tambour (11) disposé autour de la roue de façon que la roue puisse être amenée au contact de la surface périphérique intérieure du tambour (11) ;

(c) un dispositif de charge radiale (9) qui, pour permettre l'application d'une force radiale qui s'exerce dans la direction radiale de la roue sur le dispositif de fixation (7, 8), est relié à ce dernier ;

(d) un dispositif de charge axiale (10) pour permettre l'application d'une force axiale qui s'exerce dans la direction axiale de la roue du véhicule ; et

(e) un dispositif (12 à 15) permettant de faire tourner le tambour (11) ;
caractérisé par le fait que

(f) la roue est un dispositif de remplacement d'une roue de véhicule (2, 3) qui peut être accroché au dispositif de fixation (7, 8) au moyen de boulons de roue (5), d'un moyeu de roue (4) et d'un roulement de roue (6) ; et

(g) le dispositif de charge axiale (10) pour l'application de la force axiale sur le dispositif de fixation (7, 8) est relié à ce dernier.

8. Dispositif suivant la revendication 1 ou 7, caractérisé par le fait que la force radiale qui peut être appliquée par le dispositif de charge radiale (9) et la force axiale qui peut être appliquée par le dispositif de charge axiale (10) peuvent être réglées indépendamment l'une de l'autre.

9. Dispositif suivant la revendication 1, 7 ou 8, caractérisé par le fait que le dispositif de charge radiale (9) et le dispositif de charge axiale (10) sont des cylindres servo-hydrauliques.

FIG.1

FIG. 2

FIG.3

FIG. 4

FIG.5

$-F_h$

$F_v$

$F_v'$

$-F_h'$

8

9

10

13

12

2

6

7

4

1

11

15

14

0 063 245

FIG.6

FIG.7

0 063 245

FIG. 8

0 063 245